# FASCICULE DE BREVET EUROPEEN

(11) **EP 0 573 332 B1**
(45) Date de publication et mention de la délivrance du brevet: **31.07.1996**
(21) Numéro de dépôt: 93401359.0
(22) Date de dépôt: 27.05.1993
(51) Int. Cl.: B60R 25/02

(54) **Ensemble de colonne de direction, notamment pour véhicule automobile**
Lenksäuleneinheit insbesondere für ein Kraftfahrzeug
Steering column unit especially for a motor vehicle

(30) Priorité: 03.06.1992 FR 9206735
(43) Date de publication de la demande: 08.12.1993
(73) Titulaire: ECIA - EQUIPEMENTS ET COMPOSANTS POUR L'INDUSTRIE AUTOMOBILE, F-25400 Audincourt (FR)
(72) Inventeur: Sallez, Jean-Philippe, F-25700 Valentigney (FR); Hoblingre, André, F-25700 Valentigney (FR); Henigue, Christian, F-25400 Audincourt (FR)
(74) Mandataire: Habasque, Etienne Joel Jean-François

(56) Documents cités:
- EP-A- 0 058 590
- EP-A- 0 336 881
- FR-A- 2 527 150
- US-A- 3 566 634
- US-A- 3 566 634

## Description

La présente invention concerne un ensemble de colonne de direction notamment pour véhicule automobile.

Plus particulièrement, l'invention se rapporte à un ensemble de colonne du type comportant un arbre de direction monté déplaçable à rotation dans un corps de colonne comportant un mécanisme à pène d'antivol du véhicule, déplaçable entre une position escamotée et une position active d'antivol.

Dans certains ensembles de ce type, l'arbre de direction comporte deux portions d'arbre, l'une portant le volant et l'autre étant reliée au reste du mécanisme de direction du véhicule et reliées par des moyens de liaison débrayables, déplaçables, sous la commande du mécanisme d'antivol, entre une position active d'accouplement des deux portions d'arbre et une position escamotée d'antivol de libération des deux portions d'arbre l'une par rapport à l'autre, de manière que la portion d'arbre portant le volant soit libre en rotation par rapport à l'autre portion d'arbre reliée au reste du mécanisme de direction du véhicule.

De tels ensembles de colonnes sont connus par exemple du document EP-A-0 058 590.

Ce document décrit un antivol à débrayage du volant pour véhicule automobile, dans lequel la barre de direction est formée de deux tronçons, à savoir une barre primaire, sur laquelle est monté le volant et une barre secondaire, reliée au reste du mécanisme de direction du véhicule.

Ces deux barres sont disposées bout à bout et l'entraînement de la barre secondaire à partir de la barre primaire, s'effectue au moyen d'une liaison débrayable faisant intervenir une conformation appropriée des extrémités adjacentes des deux barres et un cylindre d'assemblage présentant une surface interne conformée de manière à ce que ce cylindre soit solidaire en rotation de l'une et/ou de l'autre de ces extrémités, tout en pouvant librement coulisser sur celles-ci, les déplacement axiaux du cylindre d'assemblage étant obtenus à partir du mouvement de rotation d'une clé au moyen d'un système comprenant un excentrique et une bielle.

En fait, ces dispositifs ont été développés pour améliorer l'inviolabilité des véhicules en rendant le volant de direction libre en rotation, en position active du mécanisme d'antivol.

On s'est en effet aperçu que les ensembles de colonnes classiques dans lesquels le pène du mécanisme d'antivol s'engage en position active dans une lumière de l'arbre de direction, pouvaient facilement être forcés, ce qui se traduisait par des dégradations relativement importantes de la colonne de direction lors de tentatives de vol et une réduction notable de la sécurité de fonctionnement du véhicule.

Cependant, les ensembles du type de celui décrit dans le document précité, présentent un certain nombre d'inconvénients au niveau de leur structure relativement complexe, de la continuité de maintien mécanique des différentes pièces et en particulier des portions d'arbre entrant dans la constitution de ces ensembles, de la sécurité de fonctionnement des moyens de liaison débrayables et des jeux de transmission du mouvement de rotation entre la portion d'arbre portant le volant et la portion d'arbre reliée au reste du mécanisme de direction du véhicule.

On connaît également du document US-A-3 566 634, un ensemble de colonne de direction conforme au préambule de la revendication 1.

Cependant, cet ensemble de colonne présente un certain nombre d'inconvénients, lors du désaccouplement des moyens de liaison débrayables.

En effet, dans un tel ensemble, il subsiste toujours une friction entre les deux parties de ces moyens de liaison débrayables.

De plus, la réaction élastique des roues du véhicule sollicite ces moyens de liaison débrayables en position active.

On conçoit alors qu'en utilisation, ceci entraîne une usure des moyens de liaison, ce qui peut se traduire par un débrayage accidentel de ceux-ci.

Une telle situation n'est pas acceptable pour un composant de sécurité d'un véhicule automobile et de manière plus spécifique pour une colonne de direction.

Le but de l'invention est donc de résoudre ces problèmes en proposant un ensemble de colonne de direction notamment pour véhicule automobile, du type comportant un arbre de direction monté déplaçable à rotation dans un corps de colonne comportant un mécanisme à pène d'antivol du véhicule, déplaçable entre une position escamotée et une position active d'antivol, ledit arbre comportant deux portions d'arbre l'une portant le volant et l'autre étant reliée au reste du mécanisme de direction du véhicule et reliées par des moyens de liaison débrayables, déplaçables, sous la commande du mécanisme d'antivol, entre une position active d'accouplement des deux portions d'arbre et une position escamotée d'antivol de libération des deux portions d'arbre l'une par rapport à l'autre de manière que la portion d'arbre portant le volant soit libre en rotation par rapport à l'autre portion d'arbre reliée au reste du mécanisme de direction du véhicule, des zones d'extrémité correspondantes des portions d'arbre étant disposées l'une autour de l'autre, caractérisé en ce que les moyens de liaison débrayables comprennent des moyens reliés à la portion d'arbre reliée au reste du mécanisme de direction du véhicule et des moyens reliés et montés déplaçables autour de la portion d'arbre portant le volant, entre les positions active et escamotée.

Avantageusement, les moyens de liaison comprennent un manchon déplaçable autour d'au moins l'une des deux portions d'arbre et comportant des premiers moyens d'accouplement adaptés pour coopérer avec des moyens d'accouplement complémentaires de la portion d'arbre reliée au reste du mécanisme de direction du véhicule et des seconds moyens d'accouplement adaptés pour coopérer avec des moyens d'accouplement complémentaires de la portion d'arbre portant le volant.

Avantageusement également, au moins les premiers moyens d'accouplement sont débrayables et cet ensemble comporte des moyens de mise sous contrainte du manchon entre les deux portions d'arbre en position active de celui-ci, pour assurer une transmission sans jeu du mouvement de rotation entre les portions d'arbre.

L'invention sera mieux comprise à l'aide de la description qui va suivre, donnée uniquement à titre d'exemple et faite en se référant aux dessins annexés, sur lesquels :
- la Fig.1 représente une vue en coupe d'un premier mode de réalisation d'un ensemble de colonne de direction selon l'invention, dans laquelle des moyens de liaison débrayables entrant dans la constitution de cet ensemble, sont en position active;
- la Fig.2 représente une vue en coupe du premier mode de réalisation de l'ensemble selon l'invention, représenté sur la Fig.1, dans laquelle les moyens de liaison débrayables sont en position escamotée d'antivol;
- la Fig.3 représente une vue en perspective d'une bague de déplacement d'un manchon entrant dans la constitution d'un ensemble selon l'invention;
- la Fig.4 représente une vue en perspective d'un manchon entrant dans la constitution d'un ensemble selon l'invention;
- la Fig.5 représente une vue en perspective d'une bague d'entraînement entrant dans la constitution d'un ensemble selon l'invention;
- les Fig.6,7,8 et 9 illustrent le déplacement du manchon des moyens de liaison débrayables entrant dans la constitution d'un ensemble selon l'invention, entre une position d'accouplement des deux portions d'arbre et une position escamotée d'antivol de libération de celles-ci l'une par rapport à l'autre;
- la Fig.10 représente une variante de réalisation de moyens de verrouillage du manchon des moyens de liaison débrayables entrant dans la constitution d'un ensemble selon l'invention; et
- la Fig.11 représente une vue en coupe d'un second mode de réalisation d'un ensemble de colonne de direction selon l'invention.

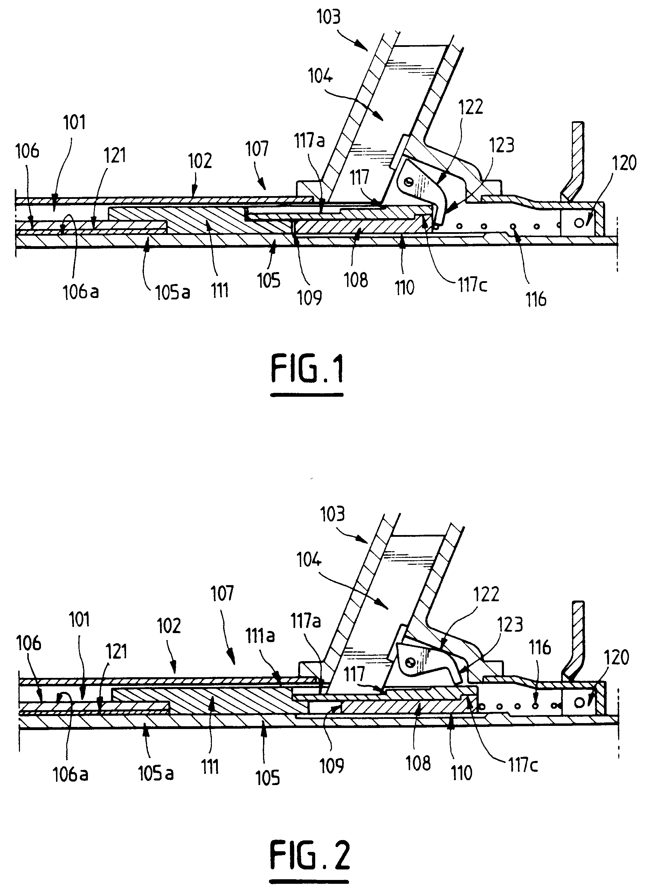

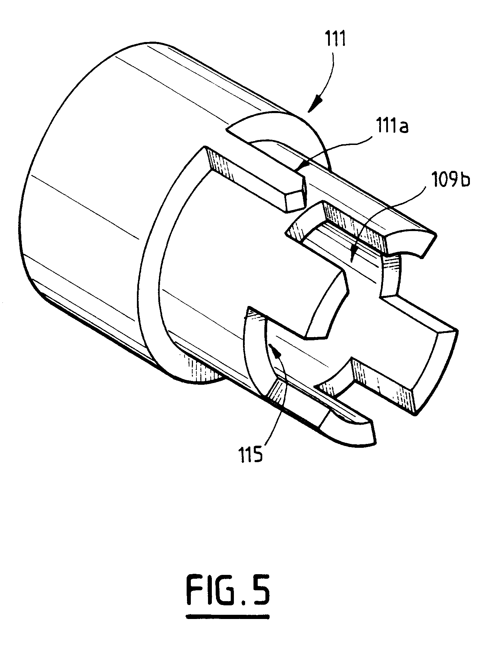

Ainsi qu'on peut le voir sur les Fig.1 à 9, un ensemble de colonne de direction notamment pour véhicule automobile, selon l'invention, comporte un arbre de direction 101 monté déplaçable à rotation dans un corps de colonne 102 comportant un mécanisme 103 à pène d'antivol du véhicule. Ce pène est désigné par la référence générale 104.

Comme cela sera décrit plus en détail par la suite, ce pène est monté déplaçable entre une position escamotée représentée sur la Fig.1 et une position active d'antivol, représentée sur la Fig.2.

L'arbre de direction comporte deux portions d'arbre désignées par les références générales 105 et 106 sur ces figures. L'une de ces portions d'arbre porte le volant de direction tandis que l'autre est reliée au reste du mécanisme de direction du véhicule.

Ces portions d'arbre sont reliées par des moyens de liaison débrayables désignés par la référence générale 107 sur ces figures. Ces moyens de liaison débrayables sont montés déplaçables, sous la commande du mécanisme d'antivol, entre une position active d'accouplement des deux portions d'arbre, représentée sur la Fig.1 et une position escamotée d'antivol de libération des deux portions d'arbre l'une par rapport à l'autre, représentée sur la Fig.2, de manière que la portion d'arbre portant le volant soit libre en rotation par rapport à l'autre portion d'arbre reliée au reste du mécanisme de direction du véhicule.

Selon l'invention, des zones d'extrémité correspondantes des portions d'arbre 105 et 106, désignées respectivement par les références 105a et 106a, sont disposées l'une autour de l'autre et les moyens de liaison débrayables 107 sont montés déplaçables autour d'au moins l'une des deux portions d'arbre externe et interne.

Dans le mode de réalisation représenté sur ces figures, la portion d'arbre interne est constituée par la portion d'arbre désignée par la référence 105 et porte le volant de direction, tandis que la portion d'arbre externe est constituée par la portion d'arbre désignée par la référence 106 et est reliée au reste du mécanisme de direction.

Sur ces figures, les moyens de liaison débrayables sont montés déplaçables autour de la portion d'arbre interne 105.

Les moyens de liaison désignés par la référence générale 107 comprennent en fait un manchon 108 comportant des premiers moyens d'accouplement adaptés pour coopérer avec des moyens d'accouplement complémentaires de la portion d'arbre 106 reliée au reste du mécanisme de direction du véhicule.

Ces premiers moyens d'accouplement sont désignés par la référence générale 109.

Ce manchon comporte également des seconds moyens d'accouplement adaptés pour coopérer avec des moyens d'accouplement complémentaires de la portion d'arbre 105 portant le volant.

Ces moyens d'accouplement sont désignés par la référence générale 110 sur ces figures.

Au moins les premiers moyens d'accouplement 109 sont débrayables.

Ainsi qu'on peut le constater à la lumière de ces figures, le manchon 108 est monté déplaçable à coulissement autour de la portion d'arbre portant le volant 105 entre une première position représentée sur la Fig.1 et une seconde position représentée sur la Fig.2, respectivement d'embrayage et de débrayage, des premiers moyens d'accouplement 109.

En fait, les seconds moyens d'accouplement 110 peuvent être formés par des parties en saillie et en creux radiales complémentaires de ce manchon 108 et de la portion d'arbre correspondante 105 pour autoriser un coulissement axial du manchon par rapport à cette portion d'arbre. Les parties en saillie et en creux radiales complémentaires sont par exemple constituées par des cannelures de type connu en soi.

Les premiers moyens d'accouplement 109 peuvent quant à eux comporter des parties en saillie 109a et en creux 109b axiales d'accouplement correspondantes du manchon 108 et de l'autre portion d'arbre 106.

Les parties en saillie et en creux correspondantes de la portion d'arbre 106 peuvent en fait être ménagées dans une bague d'entraînement 111 solidaire de cette portion d'arbre.

Les premiers moyens d'accouplement comprennent au moins deux parties en saillie adaptées pour s'engager dans au moins deux parties en creux correspondantes.

Il est prévu des moyens de mise sous contrainte du manchon 108 entre les deux portions d'arbre 105 et 106, en position active de ce manchon, pour assurer une transmission sans jeu du mouvement de rotation entre les portions d'arbre.

En fait, ce manchon est déformable radialement et dans le mode de réalisation représenté sur ces figures, les premiers moyens d'accouplement 109 comprennent également des moyens de serrage du manchon 108 sur la portion d'arbre portant le volant 105, en position active de celui-ci.

Ces moyens de serrage comprennent dans un mode de réalisation au moins deux parties en saillie axiales 112, 113 s'étendant de part et d'autre d'une fente axiale 114 du manchon 108 et sont adaptées pour s'engager dans une partie en creux axiale correspondante 115 de la bague d'entraînement 111, solidaire de la portion d'arbre 106 reliée au reste du mécanisme de direction du véhicule.

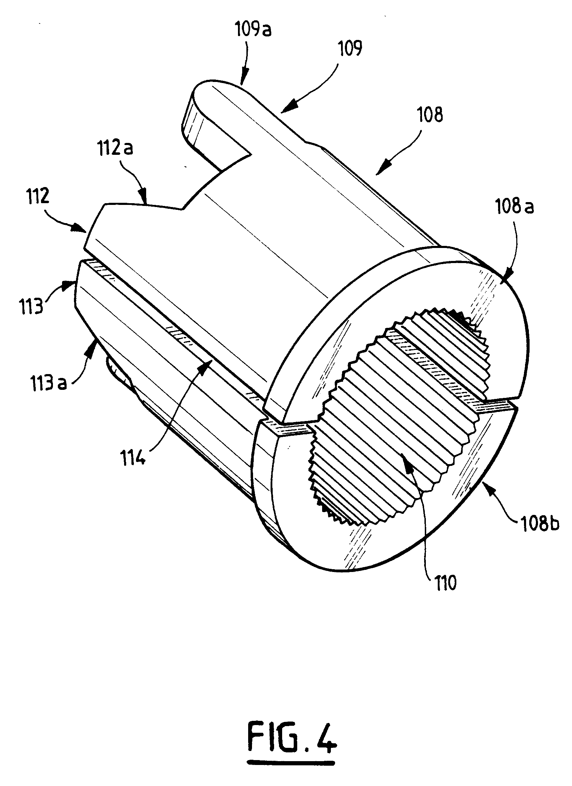

Ces parties en saillie ou en creux comportent des rampes, par exemple 112a et 113a (Fig.4) permettant un bon serrage du manchon sur la portion d'arbre portant le volant.

Ces moyens de serrage comprennent deux ensembles de parties en saillie axiales séparés chacune par une fente axiale du manchon et décalés angulairement et adaptés pour coopérer avec deux parties en creux correspondantes de la bague 111.

Par ailleurs, les surfaces de contact de ces parties en saillie et en creux des premiers moyens d'accouplement peuvent être par exemple les unes bombées et les autres en forme de plans inclinés, ce qui permet d'assurer un rattrapage automatique de jeux angulaire et radial, de façon classique au niveau de ces moyens d'accouplement, par coopération de ce type de surfaces.

Il est également à noter que les premiers moyens d'accouplement peuvent ne comporter qu'un seul ensemble de parties en saillie et en creux remplissant à la fois les fonctions d'accouplement et de serrage.

Le manchon peut en fait être formé de deux demi-coquilles 108a et 108b (Fig.4).

Des moyens 116 de sollicitation du manchon en position active d'accouplement des deux portions d'arbre externe et interne sont également prévus. Ces moyens sont par exemple formés par un ressort hélicoidal disposé autour de la portion d'arbre portant le volant 105. L'une des extrémités de ce ressort est en appui sur une extrémité du manchon et l'extrémité de celui-ci opposée à celle à laquelle sont prévus les premiers moyens d'accouplement 109, tandis que l'autre extrémité de ce ressort est en appui sur une surface de butée de la portion d'arbre 105.

Ce manchon 108 comporte également une bague de déplacement 117, libre en rotation autour de ce manchon mais solidaire en translation de celui-ci.

Cette bague de déplacement 117 comporte :
- à sa surface extérieure, au moins une rainure axiale 117a adaptée pour recevoir le pène en position active de celui-ci, pour bloquer la bague de déplacement en rotation par rapport au corps de colonne,
- à l'une de ses extrémités, au moins une partie en creux axiale 117b en forme de came de déplacement adaptée pour coopérer avec une butée complémentaire 111a de la bague d'entraînement 111 de la portion d'arbre reliée au reste du mécanisme de direction; et
- à l'autre de ses extrémités, au moins une surface 117c de déplacement du manchon de sa position active vers sa position escamotée de débrayage des premiers moyens d'accouplement, lors de la rotation des portions d'arbre, par appui de la butée complémentaire 111a sur la partie en creux en forme de came de la bague de déplacement 117, comme cela sera décrit plus en détail par la suite.

Bien entendu, plusieurs rainures parallèles peuvent être régulièrement disposées sur la surface extérieure de cette bague de déplacement pour permettre un blocage très rapide de celle-ci par le pène 104.

On notera que le fond de la ou de chaque rainure est étagé, et comporte un épaulement qui permet de délimiter une position d'anti-retour du manchon en position active, tant que le pène est en position active. Cette position sera décrite plus en détail par la suite.

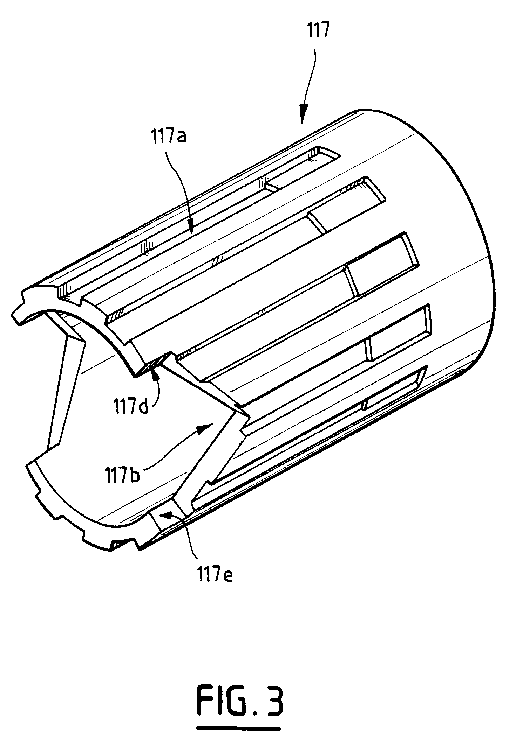

La ou chaque partie en creux axiale en forme de came de déplacement 117b de cette bague présente la forme générale d'un V dont les extrémités des branches se prolongent par des portions planes axiales et parallèles formant surfaces d'arrêt 117d et 117e (Fig.3) de la butée complémentaire 111a de la bague d'entraînement de la portion d'arbre reliée au reste du mécanisme de direction, afin de limiter le déplacement angulaire de celle-ci.

On notera à cet égard qu'il est prévu un jeu fonctionnel entre cette butée complémentaire et ces surfaces d'arrêt planes pour éviter la mise sous contrainte de cet ensemble de pièces lors du retour élastique en position de la portion d'arbre reliée au reste du mécanisme de direction du véhicule, sous l'action des pneumatiques du véhicule.

L'intérêt de ce jeu fonctionnel sera décrit plus en détail par la suite.

Des paliers de guidage de la portion d'arbre portant le volant, c'est à dire dans le mode de réalisation représenté sur ces figures, la portion d'arbre 105, sont interposés d'une part, entre le corps de colonne 102 et une partie correspondante de cette portion d'arbre et d'autre part, entre une autre partie de cette portion d'arbre et une partie correspondante de la portion d'arbre reliée au reste du mécanisme de direction, c'est à dire la portion d'arbre externe 106, pour optimiser la rigidité de l'arbre de direction et la fréquence propre de celui-ci.

Ces paliers de guidage sont désignés respectivement par les références 120 et 121.

L'un et/ou l'autre de ces paliers assure une immobilisation axiale de l'arbre de direction 101 par rapport au corps de colonne 102.

De plus, cet ensemble comporte également des moyens escamotables de verrouillage du manchon en position active.

Ces moyens sont désignés par la référence générale 122 sur ces figures et sont montés déplaçables entre une position active de verrouillage et une position escamotée de déverrouillage de ce manchon par l'intermédiaire du mécanisme à pène d'antivol du véhicule, permettant d'assurer une sécurité supplémentaire d'accouplement.

Dans le mode de réalisation représenté sur ces figures 1 à 9, les moyens de verrouillage 122 comprennent un organe de verrouillage dont une extrémité 123 est recourbée en forme de crochet adapté pour coopérer avec une surface de butée correspondante de la bague de déplacement 117 ou du manchon 108, pour retenir celui-ci en position et interdire son recul, et dont l'autre extrémité est reliée au mécanisme à pène d'antivol, pour son déplacement.

Dans le mode de réalisation représenté, la surface de butée correspondante du manchon est formée par la surface d'extrémité de celui-ci ou de la bague de déplacement 117 de celui-ci, opposée à celle à laquelle sont prévus les premiers moyens d'accouplement 109.

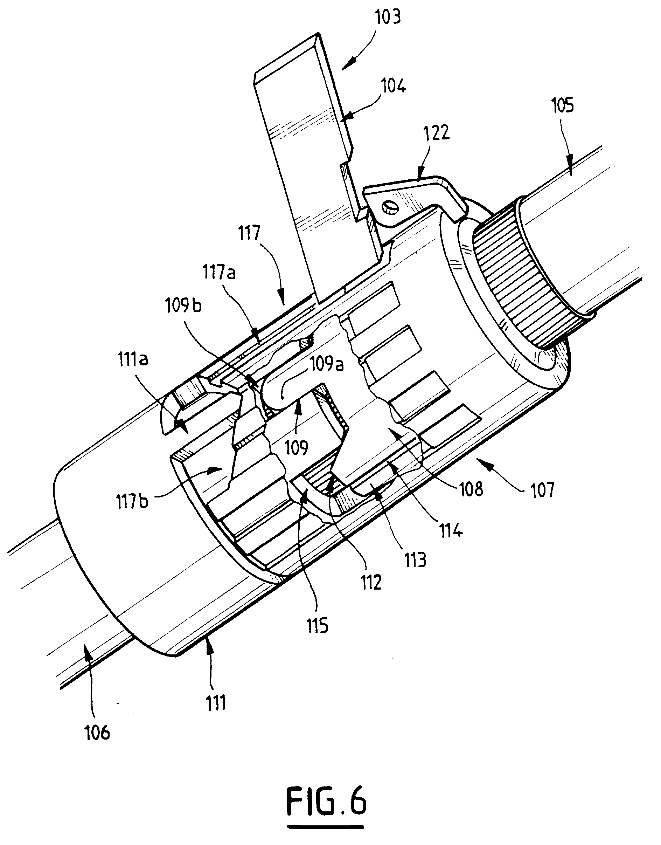

Si l'on se reporte aux Fig.1,2,6,7,8 et 9 par exemple, on conçoit que les moyens élastiques 116 sollicitent le manchon 108 en position d'accouplement des deux portions d'arbre 105 et 106. Dans cette position, les parties en saillie 109a des premiers moyens d'accouplement 109 sont engagés dans les parties en creux correspondantes 109b de la bague d'entraînement 111 et les moyens de mise sous contrainte du manchon assurant un serrage de celui-ci sur la portion d'arbre portant le volant (Fig.6).

Lors de la rotation du volant par un utilisateur, le mouvement de rotation de la portion d'arbre interne 105 portant le volant est transmise à travers les seconds moyens d'accouplement 110 au manchon 108 et de ce manchon, à travers les premiers moyens d'accouplement 109 et la bague d'entraînement 111 à la portion d'arbre externe 106 reliée au reste du mécanisme de direction.

Tout jeu de transmission entre les portions d'arbre est éliminé du fait de la mise sous contrainte du manchon entre les deux portions d'arbre.

Par ailleurs, cette portion d'arbre interne 105 portant le volant est guidée d'une part dans le corps de colonne par l'intermédiaire du palier 120 et d'autre part, dans la portion d'arbre externe 106 par le palier 121, de sorte que le guidage de celle-ci est bien assuré.

Ainsi, l'ensemble portion d'arbre interne 105, manchon de liaison débrayable 108 et portion d'arbre externe 106, tourne tout à fait librement dans le corps de colonne 102 pour permettre à l'utilisateur de contrôler la direction du véhicule.

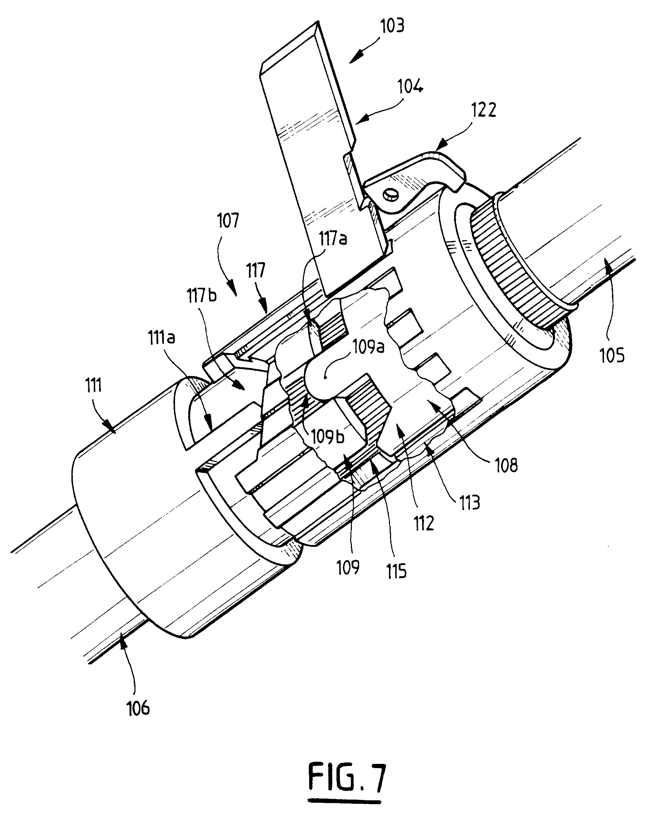

Lorsque l'utilisateur déclenche le mécanisme à pène d'antivol du véhicule, par exemple en retirant la clé de celui-ci, le pène 104 est libéré et se déplace de manière connue en soi vers l'arbre de direction (Fig.7).

Ce déplacement vers sa position active du pène est limité soit par une portion de la bague de déplacement située entre deux rainures, soit par le fond étagé d'une rainure, en fonction de la position de cette bague au moment où l'utilisateur déclenche le mécanisme d'antivol.

On notera qu'il est habituel pour un utilisateur d'un véhicule automobile, de faire tourner plus ou moins le volant de direction pour obtenir l'effet de verrouillage souhaité par le pène, dans les ensembles de colonne comportant des mécanismes à pène d'antivol classiques dans lesquels le pène s'engage dans une lumière de l'arbre de direction. En effet, la lumière de l'arbre n'est pas toujours en face du pène au moment du déclenchement du mécanisme d'antivol et il est nécessaire de déplacer légèrement l'arbre grâce au volant pour que cette lumière arrive juste en face du pène, de façon que celui-ci puisse s'engager en position active dans cette lumière pour assurer le verrouillage.

Cette routine est mise à profit dans l'ensemble de colonne de direction selon l'invention pour provoquer un déplacement du manchon des moyens de liaison débrayables vers sa position escamotée d'antivol de libération des deux portions d'arbre.

En effet, si le pène 104 du mécanisme d'antivol est en appui contre une portion de la bague de déplacement entre deux rainures de celle-ci, un déplacement angulaire du volant et donc des portions d'arbre par l'utilisateur, provoque le déplacement de cette bague par rapport au pène, par exemple par entraînement, grâce à la butée complémentaire 111a et à la partie en creux en forme de came complémentaire de cette bague, jusqu'à ce que celui-ci soit dégagé et puisse venir en appui contre le fond de la rainure pour bloquer cette bague en position par rapport au corps de colonne.

Cette descente du pène vers sa position active provoque le déplacement des moyens de verrouillage 122 vers une position escamotée de déverrouillage du manchon comme on peut le voir sur la Fig.7.

Si l'utilisateur provoque un autre déplacement angulaire du volant et donc des portions d'arbre, la butée 111a de la bague d'entraînement vient appuyer sur l'une ou l'autre des surfaces en forme de came de la bague de déplacement du manchon. La poursuite de ce déplacement angulaire des portions d'arbre provoque alors le recul de cette bague de déplacement et donc du manchon 108 à l'encontre de la sollicitation des moyens élastiques 116. Ce recul du manchon provoque le dégagement de l'extrémité correspondante des parties en saillie 112, 113 des moyens de serrage des premiers moyens d'accouplement des parties en creux correspondantes 115 de la bague d'entraînement 111.

A partir de cet instant, le manchon 108 n'est donc plus sous contrainte entre la portion d'arbre externe et la portion d'arbre interne.

Lors de la poursuite du déplacement angulaire des portions d'arbre et donc du manchon par l'utilisateur, les parties en saillie des premiers moyens d'accouplement se dégagent des parties en creux correspondantes de la bague d'entraînement 111.

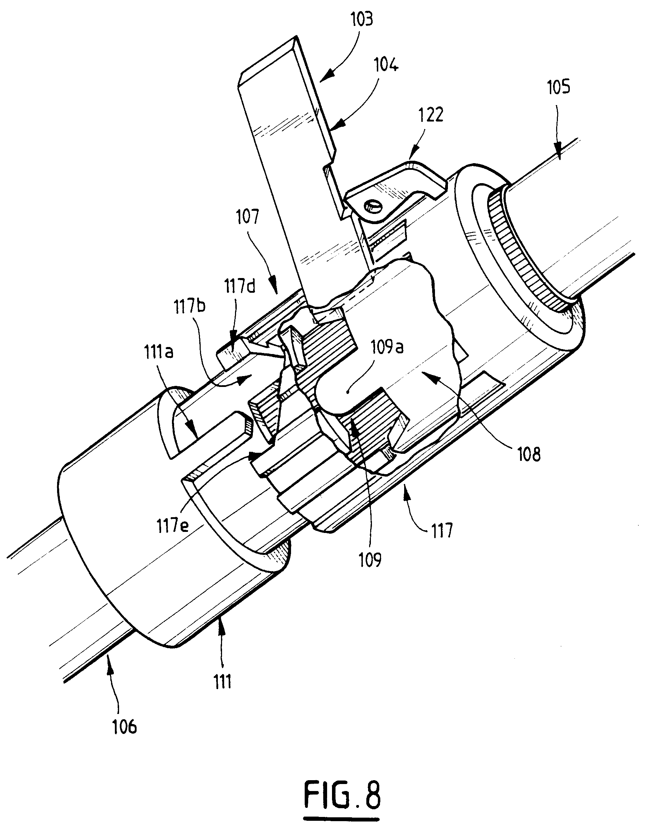

Le manchon est alors en position escamotée (Fig.8) et le pène s'engage plus profondément dans la rainure en s'appuyant sur une partie plus profonde de cette rainure et en coopérant avec l'épaulement du fond de cette rainure, il maintient de manchon en position escamotée.

Dans cette position escamotée du manchon, les premiers moyens d'accouplement sont donc en position débrayée de sorte que la portion d'arbre interne 105 portant le volant n'est plus accouplée à la bague d'entraînement 111 et peut tourner librement par rapport à celle-ci et donc à la portion d'arbre externe reliée au reste du mécanisme de direction.

Le manchon est maintenu dans cette position par le pène en position active d'antivol.

On obtient alors un effet d'antivol efficace dans la mesure où le volant est totalement libre en rotation tandis que le déplacement angulaire du reste du mécanisme de direction est limité par l'intermédiaire de la butée complémentaire 111a de la bague d'entraînement de la portion d'arbre externe 106 dont le déplacement angulaire est limité par les surfaces d'arrêt 117d, 117e de la bague de déplacement 117, cette bague étant bloquée en rotation par rapport au corps de colonne 102 par le pène 104 engagé dans une rainure de celle-ci.

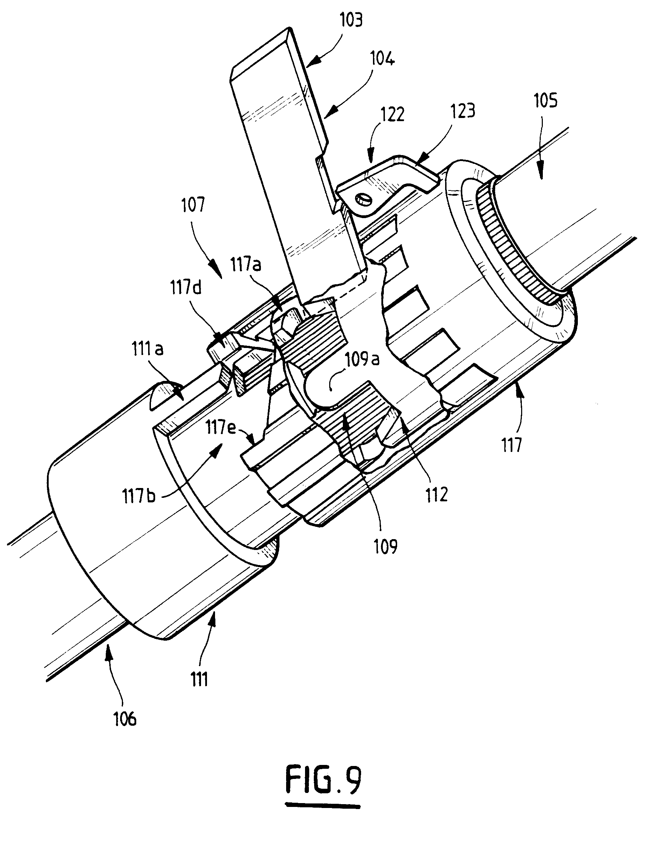

Cette position est représentée sur la Fig.9.

Lorsque l'utilisateur souhaite se servir à nouveau du véhicule, il entraîne par l'intermédiaire par exemple d'une clé, le déplacement du mécanisme à pène d'antivol du véhicule, de la position active d'antivol vers la position escamotée.

Le pène se dégage alors de la rainure de la bague de déplacement et libère celle-ci.

Le manchon est alors poussé vers sa position active par les moyens de sollicitation élastiques 116.

Cependant, tant que la ou chaque partie en saillie des premiers moyens d'accouplement 109 n'est pas en regard de la ou de chaque partie en creux correspondante de la bague d'entraînement 111, le manchon ne peut pas se déplacer totalement vers sa position active d'accouplement des deux portions d'arbre.

Selon une routine habituelle, l'utilisateur déplace alors angulairement le volant de direction et la portion d'arbre interne 105 jusqu'à obtenir cette position particulière unique dans laquelle les parties en saillie arrivent en regard des parties en creux correspondantes. Le manchon peut alors se déplacer vers sa position active sous la poussée des moyens élastiques 116 qui se détendent.

Une fois le manchon dans cette position, les moyens 122 de verrouillage du manchon en position active redescendent dans la position représentée sur la Fig.6, dans laquelle ils bloquent ce manchon en position.

Le manchon est quant à lui sollicité par les moyens élastiques 116 vers la position active et les moyens de serrage des premiers moyens d'accouplement assurent le serrage de ce manchon pour obtenir l'effet de mise sous contrainte de celui-ci entre les portions d'arbre interne et externe.

Ce serrage du manchon et donc sa mise sous contrainte entre les deux portions d'arbre sont obtenues de manière extrêmement efficace du fait de la récupération de l'énergie de détente des moyens élastiques 116.

Le fonctionnement de cet ensemble peut donc être divisé en plusieurs phases :

### 1) Phase de fonctionnement normal

La liaison entre la portion d'arbre portant le volant et la portion d'arbre reliée au reste du mécanisme de direction est assurée par les premiers moyens d'accouplement entre le manchon et cette portion d'arbre reliée au reste du mécanisme de direction et par les seconds moyens d'accouplement entre ce manchon et la portion d'arbre portant le volant. Le manchon est mis sous contrainte entre les deux portions d'arbre par les moyens de serrage de ces premiers moyens d'accouplement. Le manchon est retenu en position par les moyens de verrouillage.

### 2) Phase de débrayage des moyens d'accouplement des deux portions d'arbre.

Lorsque l'utilisateur retire par exemple la clé du mécanisme d'antivol, le pène de celui-ci se déplace de sa position escamotée vers sa position active. Les moyens de verrouillage du manchon en position active s'escamotent. Par rotation du volant, l'utilisateur provoque la venue en appui du pène dans une rainure de la bague de déplacement du manchon pour bloquer celle-ci en rotation.

Lors de la poursuite de la rotation du volant et donc des portions d'arbre, une portion en forme de came de la bague de déplacement de ce manchon, est poussée par une butée de la portion d'arbre reliée au reste du mécanisme de direction, ce qui entraîne un recul de cette bague et donc de ce manchon d'une position active vers une position escamotée, dans laquelle les premiers moyens d'accouplement sont débrayés. Les premiers moyens d'accouplement étant complétement débrayés, la portion d'arbre portant le volant peut tourner librement par rapport au reste de l'ensemble de colonne de direction. Le manchon est maintenu dans cette position par un épaulement du fond de la rainure en appui sur le pène.

Il n'est ainsi plus possible de forcer l'une ou l'autre des pièces de cet ensemble de colonne.

### 3) Phase d'embrayage des moyens d'accouplement des deux portions d'arbre.

Lorsque l'utilisateur souhaite se servir à nouveau du véhicule, il engage à nouveau la clé dans le mécanisme à pène d'antivol pour déplacer celui-ci vers sa position escamotée. Ce déplacement du pène provoque la libération de la bague de déplacement et donc du manchon de liaison des deux portions d'arbre. Celui-ci est sollicité vers sa position active par les moyens élastiques. L'utilisateur en faisant tourner le volant provoque la venue en regard de parties en saillie et en creux des premiers moyens d'accouplement entre le manchon et la portion d'arbre reliée au reste du mécanisme de direction du véhicule, qui peuvent alors s'embrayer à nouveau et assurer le serrage du manchon sur la portion d'arbre portant le volant et une liaison sans jeu entre ces portions d'arbre. Dans cette position, les moyens de verrouillage du manchon en position active, sont également déplacés par le mécanisme d'antivol de leur position escamotée vers leur position active de verrouillage de ce manchon en position. L'ensemble est alors en position de fonctionnement normal.

On notera que ces moyens de verrouillage peuvent être reliés à des moyens classiques d'interdiction du démarrage du moteur du véhicule tant que ceux-ci ne sont pas en position correcte de verrouillage du manchon en position active.

Ceci apporte encore une sécurité supplémentaire d'accouplement.

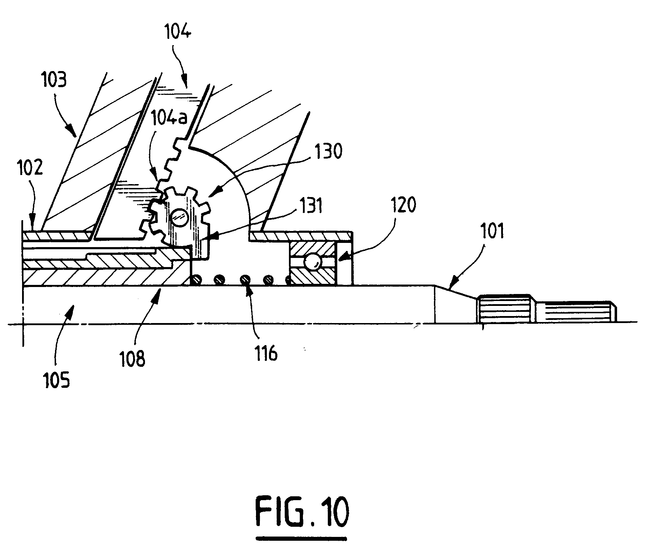

Sur la Fig.10, on a représenté une variante de réalisation des moyens de verrouillage du manchon en position active.

Alors que dans les Fig.1 à 9, ces moyens de verrouillage étaient formés par un organe dont une extrémité était recourbée en forme de crochet, dans le mode réalisation représenté sur cette figure 10, ces moyens de verrouillage comprennent un pignon 130 comportant une partie en saillie de butée 131 adaptée pour coopérer avec une surface de butée correspondante du manchon 108 ou de la bague de déplacement 117 pour retenir celui-ci en position.

Cette surface de butée correspondante du manchon est également formée par la surface d'extrémité de celui-ci ou de la bague de déplacement de celui-ci opposée à celle à laquelle sont prévus les premiers moyens d'accouplement.

Ce pignon est adapté pour coopérer avec une portion dentée 104a du pène 104 pour assurer ses déplacements entre une position active de verrouillage du manchon en position active, et une position escamotée dans laquelle le manchon 108 peut se déplacer vers sa position escamotée d'antivol de libération des deux portions d'arbre.

Les autres éléments représentés sur cette figure 10 sont désignés par les mêmes numéros de référence que ceux utilisés pour désigner les éléments analogues sur les figures 1 à 9.

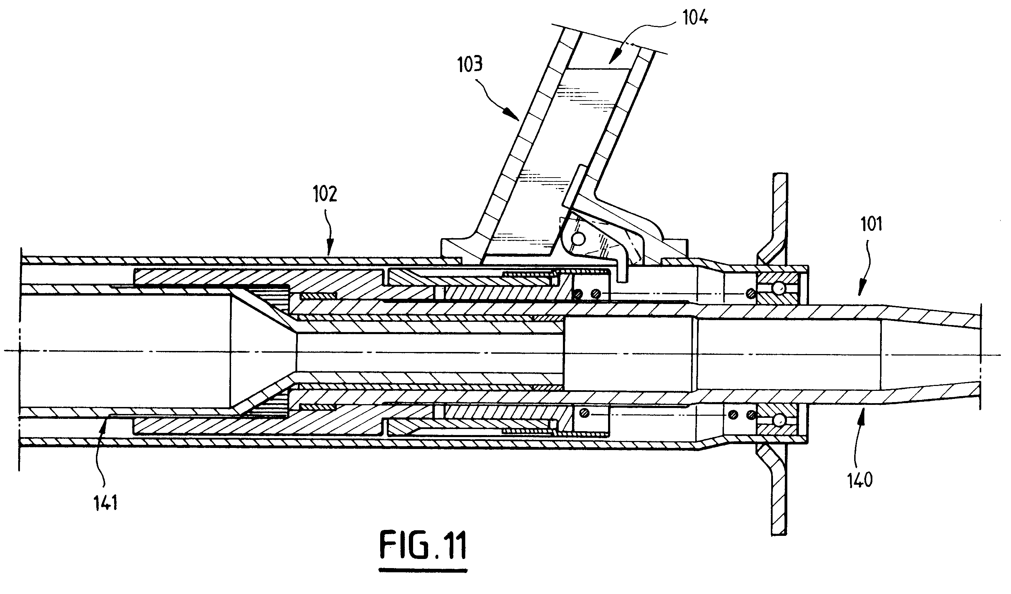

Sur la Fig.11, on a représenté encore un autre mode de réalisation d'un ensemble selon l'invention.

On reconnait sur cette figure 11, l'arbre de direction 101, le corps de colonne 102 et le mécanisme à pène d'antivol 103.

L'arbre de direction comporte toujours deux portions d'arbre désignées par les références 140 et 141 sur ces figures.

Cependant, alors que dans les modes de réalisation décrits en regard des Fig.1 à 9, le volant était porté par la portion d'arbre interne et le reste du mécanisme de direction était relié à la portion d'arbre externe, dans le mode de réalisation réprésenté sur la Fig.11, le volant est porté par la portion d'arbre externe 140 et le reste du mécanisme de direction est relié à la portion d'arbre interne 141.

Les autres éléments représentés sur cette figure, sont analogues à ceux représentés sur les figures précédentes.

On conçoit donc que l'ensemble de colonne selon l'invention présente une sécurité de fonctionnement optimale.

En effet, les moyens de liaison débrayables sont montés déplaçables entre les deux portions d'arbre, sont sollicités en position active par des moyens élastiques et sont retenus dans cette position par des moyens de verrouillage dont la position est pilotée par le mécanisme à pène d'antivol. De plus, en position active, des moyens de liaison débrayables sont mis sous contrainte entre les deux portions d'arbre.

En position normale de fonctionnement, la transmission du mouvement de rotation entre les deux portions d'arbre est donc assurée sans jeu et de manière extrêmement sûre, c'est à dire sans risque de déclenchement intempestif.

Le passage en position d'antivol se fait selon une routine habituelle pour l'utilisateur par retrait de la clé du mécanisme d'antivol et déplacement du volant de direction jusqu'à obtenir l'effet d'antivol.

Le retour en position normale de conduite se fait également selon une routine habituelle pour l'utilisateur par engagement de la clé dans le mécanisme d'antivol et déplacement du volant jusqu'à obtenir l'effet d'embrayage des deux portions d'arbre et ceci sans risque de se trouver dans une fausse position d'accouplement des deux portions d'arbre.

## Revendications

1. Ensemble de colonne de direction notamment pour véhicule automobile, du type comportant un arbre de direction (101) monté déplaçable à rotation dans un corps de colonne (102) comportant un mécanisme (103) à pène (104) d'antivol du véhicule, déplaçable entre une position escamotée et une position active d'antivol, ledit arbre comportant deux portions d'arbre (105,106;140,141), l'une portant le volant et l'autre étant reliée au reste du mécanisme de direction du véhicule et reliées par des moyens de liaison débrayables (107), déplaçables, sous la commande du mécanisme d'antivol, entre une position active d'accouplement des deux portions d'arbre et une position escamotée d'antivol de libération des deux portions d'arbre l'une par rapport à l'autre de manière que la portion d'arbre (105;140) portant le volant soit libre en rotation par rapport à l'autre portion d'arbre (106; 141) reliée au reste du mécanisme de direction du véhicule, des zones d'extrémité correspondantes (105a,106a) des portions d'arbre étant disposées l'une autour de l'autre, caractérisé en ce que les moyens de liaison débrayables (107) comprennent des moyens reliés à la portion d'arbre reliée au reste du mécanisme de direction du véhicule et des moyens reliés et montés déplaçables autour de la portion d'arbre portant le volant, entre les positions active et escamotée.

2. Ensemble selon la revendication 1, caractérisé en ce que les moyens de liaison comprennent un manchon (108) déplaçable autour d'au moins l'une des deux portions d'arbre et comportant des premiers moyens d'accouplement (109) adaptés pour coopérer avec des moyens d'accouplement complémentaires de la portion d'arbre (106) reliée au reste du mécanisme de direction du véhicule et des seconds moyens d'accouplement (110) adaptés pour coopérer avec des moyens d'accouplement complémentaires de la portion d'arbre (105;140) portant le volant.

3. Ensemble selon la revendication 2, caractérisé en ce qu'au moins les premiers moyens d'accouplement (109) sont débrayables.

4. Ensemble selon la revendication 3, caractérisé en ce que le manchon (108) est monté déplaçable à coulissement par rapport aux deux portions d'arbre, entre une position d'embrayage et une position de débrayage des premiers moyens d'accouplement (109), les seconds moyens d'accouplement (110) étant formés par des parties en saillie et en creux radiales complémentaires de ce manchon et de la portion d'arbre correspondante, autorisant un coulissement axial du manchon par rapport à cette portion d'arbre, tandis que les premiers moyens d'accouplement (109) sont formés par des parties en saillie et en creux axiales correspondantes, de l'autre portion d'arbre et du manchon.

5. Ensemble selon la revendication 2,3 ou 4, caractérisé en ce qu'il comporte des moyens de mise sous contrainte du manchon (108) entre les deux portions d'arbre en position active de celui-ci, pour assurer une transmission sans jeu du mouvement de rotation entre les portions d'arbre.

6. Ensemble selon la revendication 5, caractérisé en ce que le manchon est déformable radialement, et en ce que les premiers moyens d'accouplement (109) comprennent en outre des moyens de serrage du manchon sur la portion d'arbre reliée au volant, en position active de celui-ci.

7. Ensemble selon la revendication 6, caractérisé en ce que les moyens de serrage comprennent au moins deux parties en saillie axiales (112,113) s'étendant de part et d'autre d'une fente axiale (114) du manchon (108) et adaptées pour s'engager dans une partie en creux axiale (115) correspondante de la portion d'arbre reliée au reste du mécanisme de direction du véhicule.

8. Ensemble selon la revendication 7, caractérisé en ce que les parties en saillie axiales (112,113) du manchon et/ou les parois de la portion d'arbre reliée au reste du mécanisme de direction, délimitant la partie en creux axiale correspondante comportent des rampes (112a, 113a) de serrage du manchon sur la portion d'arbre portant le volant.

9. Ensemble selon l'une quelconque des revendications 4 à 8, caractérisé en ce que les premiers moyens d'accouplement comprennent au moins deux parties en saillie (109a) adaptées pour s'engager dans deux parties en creux correspondantes (109b) de la portion d'arbre reliée au reste du mécanisme de direction.

10. Ensemble selon l'une quelconque des revendications 7,8 ou 9, caractérisé en ce que les moyens de serrage comprennent deux ensembles de parties en saillie séparées chacune par une fente axiale du manchon adaptés pour s'engager dans deux parties en creux axiales correspondantes de la portion d'arbre externe.

11. Ensemble selon l'une quelconque des revendications 4 à 10, caractérisé en ce que la ou chaque partie en creux axiale (109a, 115) des premiers moyens d'accouplement, est prévue dans une bague d'entraînement (111) solidaire de la portion d'arbre reliée au reste du mécanisme de direction.

12. Ensemble selon l'une quelconque des revendications 4 à 11, caractérisé en ce que les surfaces de contact des parties en saillie et en creux correspondantes des moyens de serrage, sont les unes bombées et les autres en forme de plans inclinés.

13. Ensemble selon l'une quelconque des revendications 2 à 12, caractérisé en ce que les premiers moyens d'accouplement (109) sont prévus à l'une des extrémités du manchon (108).

14. Ensemble selon l'une quelconque des revendications 2 à 13, caractérisé en ce qu'il comporte des moyens élastiques (116) de sollicitation du manchon (108) en position active d'accouplement des deux portions d'arbre.

15. Ensemble selon la revendication 14, caractérisé en ce que les moyens élastiques comprennent un ressort hélicoïdal (116) disposé autour de la portion d'arbre portant le volant (105;140) dont une extrémité est en appui sur l'une des extrémités du manchon et l'autre sur une surface de butée de cette portion d'arbre.

16. Ensemble selon les revendications 13 et 14, caractérisé en ce que le ressort est en appui sur l'extrémité du manchon opposée à celle à laquelle sont prévus les premiers moyens d'accouplement.

17. Ensemble selon l'une quelconque des revendications 2 à 16, caractérisé en ce qu'il comporte une bague de déplacement (117) du manchon (108) montée mobile à rotation autour de celui-ci, et comportant :
- à sa surface extérieure, au moins une rainure axiale (117a) adaptée pour recevoir le pène (104) en position active de celui-ci, pour bloquer la bague de déplacement en rotation par rapport au corps de colonne,
- à l'une de ses extrémités, au moins une portion en forme de came de déplacement (117b) adaptée pour coopérer avec une surface de butée complémentaire (111a) de la portion d'arbre reliée au reste du mécanisme de direction du véhicule et déplacer ce manchon vers sa position escamotée; et
- à l'autre de ses extrémités, au moins une surface de déplacement (117c) du manchon de sa position active d'embrayage vers sa position escamotée de débrayage des premiers moyens d'accouplement (109) lors de la rotation des portions d'arbre, par appui de la surface de butée complémentaire sur une portion en forme de came de déplacement.

18. Ensemble selon la revendication 17, caractérisé en ce que plusieurs rainures axiales sont régulièrement réparties sur la surface extérieure de la bague de déplacement (117).

19. Ensemble selon la revendication 17 ou 18, caractérisé en ce que la ou chaque portion en forme de came de déplacement de la bague de déplacement (117) se présente sous la forme générale d'un V dont les extrémités des branches se prolongent par des portions planes axiales (117d, 117e) d'arrêt de la surface de butée complémentaire (111a) de la portion d'arrêt reliée au reste du mécanisme de direction du véhicule, afin de limiter le déplacement angulaire de celle-ci.

20. Ensemble selon la revendication 19, caractérisé en ce qu'il est prévu un jeu fonctionnel entre la surface de butée (111a) de la portion d'arbre reliée au reste du mécanisme de direction du véhicule et les portions planes axiales d'arrêt (117d, 117e) pour éviter la mise sous contrainte de cet ensemble lors du retour élastique en position de la portion d'arbre reliée au reste du mécanisme de direction du véhicule, sous l'action des pneumatiques de véhicule.

21. Ensemble selon l'une quelconque des revendications 17 à 20, caractérisé en ce que la ou chaque rainure de la bague de déplacement (117) comporte un fond étagé muni d'un épaulement venant en butée contre le pène (104) en position active pour délimiter une position d'anti-retour du manchon en position active d'embrayage des premiers moyens d'accouplement (109) tant que le pène est en position active.

22. Ensemble selon l'une quelconque des revendication 17 à 21, caractérisé en ce que la bague de déplacement (117) comporte deux parties en creux en forme de came de déplacement, diamétralement opposées.

23. Ensemble selon l'une quelconque des revendications 2 à 22, caractérisé en ce que des paliers de guidage (120,121) de la portion d'arbre portant le volant sont interposés d'une part entre le corps de colonne et une partie correspondante de cette portion d'arbre et d'autre part, entre une autre partie de cette portion d'arbre et une partie correspondante de la portion d'arbre reliée au reste du mécanisme de direction.

24. Ensemble selon l'une quelconque des revendications 2 à 23, caractérisé en ce qu'il comporte des moyens escamotables (122;130) de verrouillage du manchon (108) en position active.

25. Ensemble selon la revendication 24, caractérisé en ce que les moyens de verrouillage du manchon en position active sont montés déplaçables entre une position active de verrouillage et une position escamotée de déverrouillage de celui-ci par l'intermédiaire du mécanisme à pène d'antivol du véhicule (103).

26. Ensemble selon la revendication 25, caractérisé en ce que les moyens de verrouillage comprennent un organe de verrouillage (122) dont une extrémité est recourbée en forme de crochet (123) adapté pour coopérer avec une surface de butée correspondante du manchon (108) pour retenir celui-ci en position et dont l'autre extrémité est reliée au mécanisme à pène d'antivol.

27. Ensemble selon la revendication 25, caractérisé en ce que les moyens de verrouillage comprennent un pignon (130) comportant une partie en saillie de butée (131) adaptée pour coopérer avec une surface de butée correspondante du manchon (108) pour retenir celui-ci en position et adapté pour coopérer avec une portion dentée (104a) du pène.

28. Ensemble selon la revendication 26 ou 27, caractérisé en ce que la surface de butée correspondante du manchon (108) est formée par la surface d'extrémité de celui-ci opposée à celle à laquelle sont prévus les premiers moyens d'accouplement (109).

29. Ensemble selon l'une quelconque des revendications 2 à 28, caractérisé en ce que le manchon (108) comporte deux demi-coquilles (108a,108b).

30. Ensemble selon l'une quelconque des revendictions 24 à 28, caractérisé en ce que les moyens (122; 130) de verrouillage du manchon sont reliés à des moyens d'interdiction du démarrage du moteur du véhicule tant qu'ils ne sont pas en position de verrouillage du manchon en position active.

31. Ensemble selon l'une quelconque des revendications précédentes, caractérisé en ce que la portion d'arbre interne (105) porte le volant.

32. Ensemble selon l'une quelconque des revendications 1 à 30, caractérisé en ce que la portion d'arbre externe (140) porte le volant.

## Claims

1. Steering column assembly notably for a motor vehicle, of the type having a steering shaft (101) movably mounted so as to rotate in a column body (102) having a mechanism (103) with a vehicle anti-theft bolt (104) able to move between a retracted position and an active anti-theft position, the said shaft having two shaft portions (105, 106; 140, 141), one carrying the steering wheel and the other being connected to the remainder of the steering mechanism of the vehicle and connected by disengageable connection means (107), movable, under the control of the anti-theft mechanism, between an active position coupling the two shaft portions and a retracted anti-theft position freeing the two shaft portions with respect to each other so that the shaft portion (105; 140) carrying the steering wheel is free to rotate with respect to the other shaft portion (106; 141) connected to the remainder of the steering mechanism of the vehicle, corresponding end areas (105a, 106a) of the shaft portions being disposed one about the other, characterised in that the disengageable connection means (107) comprise means connected to the shaft portion connected to the remainder of the steering mechanism of the vehicle and means connected and mounted so as to move around the shaft portion carrying the steering wheel, between the active and retracted positions.

2. Assembly according to Claim 1, characterised in that the connection means comprise a sleeve (108) able to move around at least one of the two shaft portions and having first coupling means (109) adapted to cooperate with complementary coupling means for the shaft portion (106) connected to the remainder of the steering mechanism of the vehicle and second coupling means (110) adapted to cooperate with complementary coupling means for the shaft portion (105; 140) carrying the steering wheel.

3. Assembly according to Claim 2, characterised in that at least the first coupling means (109) are disengageable.

4. Assembly according to Claim 3, characterised in that the sleeve (108) is movably mounted so as to slide with respect to the two shaft portions, between an engaged position and a disengaged position for the first coupling means (109), the second coupling means (110) being formed by complementary projecting and recessed radial parts of this sleeve and of the corresponding shaft portion, allowing an axial sliding of the sleeve with respect to this shaft portion, while the first coupling means (109) are formed by corresponding projecting and recessed axial parts of the other shaft portion and of the sleeve.

5. Assembly according to Claim 2, 3 or 4, characterised in that it includes means for stressing the sleeve (108) between the two shaft portions in the active position thereof, to provide for transmission without a rotational movement clearance between the shaft portions.

6. Assembly according to Claim 5 characterised in that the sleeve is radially deformable, and in that the first coupling means (109) also comprise means for clamping the sleeve on the shaft portion connected to the steering wheel, in the active position thereof.

7. Assembly according to Claim 6, characterised in that the clamping means comprise at least two axial projecting parts (112, 113) extending on each side of an axial slot (114) in the sleeve (108) and adapted to engage in a corresponding recessed axial part (115) of the shaft portion connected to the remainder of the steering mechanism of the vehicle.

8. Assembly according to Claim 7, characterised in that the axial projecting parts (112, 113) of the sleeve and/or the walls of the shaft portion which is connected to the remainder of the steering mechanism define the corresponding axial recessed part having ramps (112a, 113a) for clamping the sleeve on the shaft portion carrying the steering wheel.

9. Assembly according to any one of Claims 4 to 8, characterised in that the first coupling means comprise at least two projecting parts (109a) adapted to engage in two corresponding recessed parts (109a) of the shaft portion connected to the remainder of the steering mechanism.

10. Assembly according to any one of Claims 7, 8 or 9, characterised in that the clamping means comprise two assemblies of projecting parts each separated by an axial slot of the sleeve adapted to engage in two corresponding axial recessed parts of the external shaft portion.

11. Assembly according to any one of Claims 4 to 10, characterised in that the axial recessed part or parts (109a, 115) of the first coupling means are provided in a drive ring (111) fixed to the shaft portion connected to the remainder of the steering mechanism.

12. Assembly according to any one of Claims 4 to 11, characterised in that the surfaces of contact between the corresponding projecting and recessed parts of the clamping means are curved in the one case and in the form of inclined planes in the other case.

13. Assembly according to any one of Claims 2 to 12, characterised in that the first coupling means (109) are provided at one end of the sleeve (108).

14. Assembly according to any one of Claims 2 to 13, characterised in that it includes elastic means (116) for forcing the sleeve (108) into the active position of coupling of the two shaft portions.

15. Assembly according to Claim 14, characterised in that the elastic means comprise a helical spring (116) disposed about the shaft portion carrying the steering wheel (105; 140), one end of which bears on one of the ends of the sleeve and the other on an abutment surface of this shaft portion.

16. Assembly according to Claims 13 and 14, characterised in that the spring bears against the end of the sleeve opposite to that at which the first coupling means are provided.

17. Assembly according to one of Claims 2 to 16, characterised in that it includes a movement ring (117) for the sleeve (108) movably mounted with respect to rotation about the latter and having;
- on its external surface, at least one axial groove (117a) adapted to receive the bolt (104) in the active position thereof, to lock the rotation of the movement ring in relation to the column body,
- at one of its ends, at least one portion in the form of a movement cam (117b) adapted to cooperate with a complementary abutment surface (111a) of the shaft portion connected to the remainder of the steering mechanism of the vehicle and move this sleeve towards its retracted position; and
- at its other end, at least one surface (117c) for moving the sleeve from its active position of engagement to its retracted position of disengagement of the first coupling means (109) when the shaft portions are rotated, through the bearing of the complementary abutment surface on a portion in the form of a movement cam.

18. Assembly according to Claim 17, characterised in that several axial grooves are evenly distributed on the external surface of the movement ring (117).

19. Assembly according to Claim 17 or 18, characterised in that the portion or portions in the form of a movement cam of the movement ring (117) are in the overall shape of a V, the ends of whose legs are extended by axial plane portions (117d, 117e) for stopping the complementary abutment surface (111a) of the stop portion connected to the remainder of the steering mechanism of the vehicle, so as to limit the angular movement thereof.

20. Assembly according to Claim 19, characterised in that a functional clearance is provided between the abutment surface (111a) of the shaft portion connected to the remainder of the steering mechanism of the vehicle and the axial plane stop portions (117d, 117e) to prevent the stressing of this assembly during the elastic return to its position of the shaft portion connected to the remainder of the steering mechanism of the vehicle, under the action of the vehicle pneumatics.

21. Assembly according to any one of Claims 17 to 20, characterised in that the groove or grooves of the movement ring (117) have a stepped bottom provided with a shoulder coming into abutment against the bolt (104) in the active position to define a non-return position of the sleeve in the active position of engagement of the first coupling means (109) as long as the bolt is in the active position.

22. Assembly according to any one of Claim 17 to 21, characterised in that the movement ring (117) has two diametrically opposite hollow parts in the form of a movement cam.

23. Assembly according to any one of Claims 2 to 22, characterised in that guide bearings (120, 121) for the shaft portion carrying the steering wheel are interposed on the one hand between the column body and a corresponding part of this shaft portion and on the other hand between another part of this shaft portion and a corresponding part of the shaft portion connected to the remainder of the steering mechanism.

24. Assembly according to any one of Claims 2 to 23, characterised in that it includes retractable means (122; 130) for locking the sleeve (108) in the active position.

25. Assembly according to Claim 24, characterised in that the means for locking the sleeve in the active position are mounted so as to move between an active locking position and a retracted position for the unlocking thereof by means of the anti-theft bolt mechanism of the vehicle (103).

26. Assembly according to Claim 25, characterised in that the locking means comprise a locking device (122), one end of which is curved in the form of a hook (123) adapted to cooperate with a corresponding abutment surface of the sleeve (108) to retain the latter in position, and the other end of which is connected to the anti-theft bolt mechanism.

27. Assembly according to Claim 25, characterised in that the locking means comprise a pinion (130) having a projecting abutment part (131) adapted to cooperate with a corresponding abutment surface of the sleeve (108) to retain the latter in position and adapted to cooperate with a toothed portion (104a) of the bolt.

28. Assembly according to Claim 26 or 27, characterised in that the corresponding abutment surface of the sleeve (108) is formed by the end surface thereof opposing the one at which the first coupling means (109) are provided.

29. Assembly according to any one of Claims 2 to 28, characterised in that the sleeve (108) has two half-shells (108a, 108b).

30. Assembly according to any one of Claims 24 to 28, characterised in that the means (122; 130) for locking the sleeve are connected to means for preventing the starting of the vehicle engine while they are not in the position of locking the sleeve in the active position.

31. Assembly according to any one of the preceding claims, characterised in that the internal shaft portion (105) carries the steering wheel.

32. Assembly according to any one of Claims 1 to 30, characterised in that the external shaft portion (140) carries the steering wheel.

## Patentansprüche

1. Lenksäuleneinheit insbesondere für Kraftfahrzeug, umfassend eine Lenkwelle (101), die in einem Säulenkörper (102) drehbeweglich montiert ist, der einen Mechanismus (103) mit einem Riegel (104) zur Diebstahlsicherung des Fahrzeugs besitzt, der zwischen einer weggerückten Stellung und einer aktiven Diebstahlsicherungsstellung beweglich ist, wobei diese Welle zwei Wellenabschnitte (105, 106; 114, 141) besitzt, deren einer das Lenkrad trägt und deren anderer mit dem Rest des Lenkmechanismus des Fahrzeugs verbunden ist und die durch auskuppelbare Verbindungsmittel (107) verbunden sind, die unter der Betätigung durch den Diebstahlsicherungsmechanismus zwischen einer aktiven Stellung der Kupplung der beiden Wellenabschnitte und einer weggerückten Diebstahlsicherungsstellung der Freigabe der beiden Wellenabschnitte voneinander beweglich sind, so daß der das Lenkrad tragende Wellenabschnitt (105; 140) bezüglich des anderen, mit dem Rest des Lenkmechanismus des Fahrzeugs verbundenen Wellenabschnitt (106; 141) frei drehbar ist, wobei entsprechende Endbereiche (105a, 106a) der Wellenabschnitte aufeinander angeordnet sind, dadurch gekennzeichnet, daß die auskuppelbaren Verbindungsmittel (107) Mittel, die mit dem mit dem Rest des Lenkmechanismus des Fahrzeugs verbundenen Wellenabschnitt verbunden sind, und Mittel aufweisen, die mit dem das Lenkrad tragenden Wellenabschnitt verbunden sind und um diesen herum zwischen der aktiven Stellung und der weggerückten Stellung beweglich montiert sind.

2. Einheit nach Anspruch 1, dadurch gekennzeichnet, daß die Verbindungsmittel eine Muffe (108) aufweisen, die um mindestens einen der beiden Wellenabschnitte herum beweglich ist und erste Kupplungsmittel (109), die so ausgelegt sind, daß sie mit ergänzenden Kupplungsmitteln des mit dem Rest des Lenkmechanismus des Fahrzeugs verbundenen Wellenabschnitts (106) zusammenwirken, und zweite Kupplungsmittel (110) aufweist, die so ausgelegt sind, daß sie mit ergänzenden Kupplungsmitteln des das Lenkrad tragenden Wellenabschnitts (105; 140) zusammenwirken.

3. Einheit nach Anspruch 2, dadurch gekennzeichnet, daß mindestens die ersten Kupplungsmittel (109) auskuppelbar sind.

4. Einheit nach Anspruch 3, dadurch gekennzeichnet, daß die Muffe (108) bezüglich der beiden Wellenabschnitte zwischen einer Stellung der Einkupplung und einer Stellung der Auskupplung der ersten Kupplungsmittel (109) verschiebbar beweglich montiert ist, wobei die zweiten Kupplungsmittel (110) von ergänzenden hervorstehenden und ausgesparten radialen Teilen dieser Muffe und des entsprechenden Wellenabschnitts gebildet sind, die ein axiales Gleiten der Muffe bezüglich dieses ersten Wellenabschnitts zulassen, während die ersten Kupplungsmittel (109) von entsprechenden hervorstehenden und ausgesparten axialen Teilen des anderen Wellenabschnitts und der Muffe gebildet sind.

5. Einheit nach Anspruch 2, 3 oder 4, dadurch gekennzeichnet, daß sie Mittel zur Belastung der Muffe (108) zwischen den beiden Wellenabschnitten in ihrer aktiven Stellung besitzt, um eine spielfreie Übertragung der Drehbewegung zwischen den Wellenabschnitten zu gewährleisten.

6. Einheit nach Anspruch 5, dadurch gekennzeichnet, daß die Muffe radial verformbar ist und daß die ersten Kupplungsmittel (109) außerdem Mittel zum Festklemmen der Muffe auf dem mit dem Lenkrad verbundenen Wellenabschnitt in ihrer aktiven Stellung aufweisen.

7. Einheit nach Anspruch 6, dadurch gekennzeichnet, daß die Klemmittel mindestens zwei axiale hervorstehende Teile (112, 113) aufweisen, die sich zu beiden Seiten eines axialen Schlitzes (114) der Muffe (108) erstrecken und so ausgelegt sind, daß sie in einen entsprechenden, ausgesparten axialen Teil (115) des mit dem Rest des Lenkmechanismus des Fahrzeugs verbundenen Wellenabschnitts eintreten.

8. Einheit nach Anspruch 7, dadurch gekennzeichnet, daß die hervorstehenden axialen Teile (112, 113) der Muffe und/oder die den entsprechenden axialen ausgesparten Teil abgrenzenden Wände des mit dem Rest des Lenkmechanismus verbundenen Wellenabschnitts Rampen (112a, 113a) zur Festklemmung der Muffe auf dem das Lenkrad tragenden Wellenabschnitt aufweisen.

9. Einheit nach einem der Ansprüche 4 bis 8, dadurch gekennzeichnet, daß die ersten Kupplungsmittel mindestens zwei hervorstehende Teile (109a) aufweisen, die so ausgelegt sind, daß sie in zwei entsprechende ausgesparte Teile (109b) des mit dem Rest des Lenkmechanismus verbundenen Wellenabschnitts eintreten.

10. Einheit nach einem der Ansprüche 7, 8 oder 9, dadurch gekennzeichnet, daß die Klemmittel zwei Gruppen von jeweils durch einen axialen Schlitz der Muffe getrennten hervorstehenden Teilen umfassen, die ausgelegt sind, um in zwei entsprechende ausgesparte axiale Teile des äußeren Wellenabschnitts einzutreten.

11. Einheit nach einem der Ansprüche 4 bis 10, dadurch gekennzeichnet, daß der oder jeder axiale ausgesparte Teil (109a, 115) der ersten Kupplungsmittel in einem Mitnahmering (111) vorgesehen ist, der mit dem mit dem Rest des Lenkmechanismus verbundenen Wellenabschnitt fest verbunden ist.

12. Einheit nach einem der Ansprüche 4 bis 11, dadurch gekennzeichnet, daß von den Kontaktflächen der einander entsprechenden hervorstehenden und ausgesparten Teile der Klemmittel die einen gewölbt und die anderen in Form von schiefen Ebenen sind.

13. Einheit nach einem der Ansprüche 2 bis 12, dadurch gekennzeichnet, daß die ersten Kupplungsmittel (109) an einem der Enden der Muffe (108) vorgesehen sind.

14. Einheit nach einem der Ansprüche 2 bis 13, dadurch gekennzeichnet, daß sie elastische Mittel (116) zur Belastung der Muffe (108) in die aktive Stellung der Kupplung der beiden Wellenabschnitte aufweist.

15. Einheit nach Anspruch 14, dadurch gekennzeichnet, daß die elastischen Mittel eine Schraubenfeder (116) aufweisen, die auf dem das Lenkrad tragenden Wellenabschnitt (105; 140) angeordnet ist und von der ein Ende sich an einem der Enden der Muffe und das andere auf einer Anschlagsfläche dieses Wellenabschnitts abstützt.

16. Einheit nach den Ansprüchen 13 und 14, dadurch gekennzeichnet, daß die Feder sich an dem Ende der Muffe abstützt, das dem Ende entgegengesetzt ist, an welchem die ersten Kupplungsmittel vorgesehen sind.

17. Einheit nach einem der Ansprüche 2 bis 16, dadurch gekennzeichnet, daß sie einen Ring (117) zur Bewegung der Muffe (108) besitzt, der auf dieser drehbeweglich montiert ist und aufweist:
- an seiner Außenfläche mindestens eine axiale Nut (117a), die ausgelegt ist, um den Riegel (104) in dessen aktiver Stellung aufzunehmen, um den Bewegungsring hinsichtlich Drehung bezüglich des Säulenkörpers zu blockieren,
- an einem seiner Enden mindestens einen Abschnitt in Form eines Bewegungsnockens (117b), der ausgelegt, um mit einer ergänzenden Anschlagsfläche (111a) des mit dem Rest des Lenkmechanismus des Fahrzeugs verbundenen Wellenabschnitts zusammenzuwirken und diese Muffe auf ihre weggerückte Stellung zu zu bewegen; und
- am anderen seiner Enden mindestens eine Fläche (117c) zur Bewegung der Muffe aus ihrer aktiven Stellung der Einkupplung in ihre weggerückte Stellung der Auskupplung der ersten Kupplungsmittel (109) bei der Drehung der Wellenabschnitte durch Anlage der ergänzenden Anschlagsfläche an einem Abschnitt in Form eines Bewegungsnockens.

18. Einheit nach Anspruch 17, dadurch gekennzeichnet, daß mehrere axiale Nuten auf der Außenfläche des Bewegungsrings (117) regelmäßig verteilt sind.

19. Einheit nach Anspruch 17 oder 18, dadurch gekennzeichnet, daß der oder jeder Abschnitt in Form eines Bewegungsnockens des Bewegungsrings (117) die allgemeine Form eines V hat, von dem die Enden der Schenkel durch ebene axiale Abschnitte (117d, 117e) zur Blockierung der ergänzenden Anschlagsfläche (111a) des mit dem Rest des Lenkmechanismus des Fahrzeugs verbundenen Blockierungsabschnitts verlängert sind, um dessen Winkelbewegung zu begrenzen.

20. Einheit nach Anspruch 19, dadurch gekennzeichnet, daß zwischen der Anschlagsfläche (111a) des mit dem Rest des Lenkmechanismus des Fahrzeugs verbundenen Wellenabschnitts und den axialen ebenen Blockierungsabschnitten (117d, 117e) ein Funktionsspiel vorgesehen ist, um die Belastung dieser Einheit bei der elastischen Rückkehr des mit dem Rest des Lenkmechanismus des Fahrzeugs verbundenen Wellenabschnitts unter der Einwirkung der Fahrzeugreifen in ihre Stellung zu vermeiden.

21. Einheit nach einem der Ansprüche 17 bis 20, dadurch gekennzeichnet, daß die oder jede Nut des Bewegungsrings (117) einen abgestuften Boden besitzt, der mit einer Schulter versehen ist, die an dem Riegel (104) in aktiver Stellung in Anschlag kommt, um eine Stellung der Sperrung der Rückkehr der Muffe in die aktive Stellung der Einkupplung der ersten Kupplungsmittel (109) abzugrenzen, solange der Riegel in aktiver Stellung ist.

22. Einheit nach einem der Ansprüche 17 bis 21, dadurch gekennzeichnet, daß der Bewegungsring (117) zwei diametral entgegengesetzte ausgesparte Teile in Form eines Bewegungsnockens besitzt.

23. Einheit nach einem der Ansprüche 2 bis 22, dadurch gekennzeichnet, daß die Lager (120, 121) zur Führung des das Lenkrad tragenden Wellenabschnitts einerseits zwischen den Säulenkörper und einen entsprechenden Teil dieses Wellenabschnitts und andererseits zwischen einen anderen Teil dieses Wellenabschnitts und einen entsprechenden Teil des mit dem Rest des Lenkmechanismus verbundenen Wellenabschnitts eingesetzt sind.

24. Einheit nach einem der Ansprüche 2 bis 23, dadurch gekennzeichnet, daß sie wegrückbare Mittel (122; 130) zur Verriegelung der Muffe (108) in aktiver Stellung besitzt.

25. Einheit nach Anspruch 24, dadurch gekennzeichnet, daß die Mittel zur Verriegelung der Muffe in aktiver Stellung zwischen einer aktiven Stellung der Verriegelung und einer weggerückten Stellung der Entriegelung dieser Muffe über den Riegelmechanismus (103) zur Diebstahlsicherung des Fahrzeugs beweglich montiert sind.

26. Einheit nach Anspruch 25, dadurch gekennzeichnet, daß die Verriegelungsmittel ein Verriegelungsorgan (122) aufweisen, dessen eines Ende in Form eines Hakens (123) gekrümmt ist, der ausgelegt ist, um mit einer entsprechenden Anschlagsfläche der Muffe (108) zusammenzuwirken, um diese in Stellung zu halten, und dessen anderes Ende mit dem Diebstahlsicherungs-Riegelmechanismus verbunden ist.

27. Einheit nach Anspruch 25, dadurch gekennzeichnet, daß die Verriegelungsmittel ein Zahnrad (130) aufweisen, das einen hervorstehenden Anschlagsteil (131) besitzt, der ausgelegt ist, um mit einer entsprechenden Anschlagsfläche der Muffe (108) zusammenzuwirken, um diese in Stellung zu halten, und das ausgelegt ist, um mit einem gezahnte Abschnitt (104a) des Riegels zusammenzuwirken.

28. Einheit nach Anspruch 26 oder 27, dadurch gekennzeichnet, daß die entsprechende Anschlagsfläche der Muffe (108) durch die Endfläche dieser Muffe gebildet ist, die derjenigen entgegengesetzt ist, an welcher die ersten Kupplungsmittel (109) vorgesehen sind.

29. Einheit nach einem der Ansprüche 2 bis 28, dadurch gekennzeichnet, daß die Muffe (108) zwei Schalenhälften (108a, 108b) besitzt.

30. Einheit nach einem der Ansprüche 24 bis 28, dadurch gekennzeichnet, daß die Mittel (122; 130) zur Verriegelung der Muffe mit Mitteln zur Sperrung des Anlassens des Fahrzeugmotors verbunden sind, solange sie nicht in der Stelle der Verriegelung der Muffe in aktiver Stellung sind.

31. Einheit nach einem der vorhergehenden Ansprüche, dadurch gekennzeichnet, daß der innere Wellenabschnitt (105) das Lenkrad trägt.

32. Einheit nach einem der Ansprüche 1 bis 30, dadurch gekennzeichnet, daß der äußere Wellenabschnitt (140) das Lenkrad trägt.
